(19) Europäisches Patentamt / European Patent Office / Office européen des brevets

(11) **EP 4 144 173 B1**

(12) **EUROPEAN PATENT SPECIFICATION**

(45) Date of publication and mention
of the grant of the patent:
**15.10.2025 Bulletin 2025/42**

(21) Application number: **21720452.8**

(22) Date of filing: **20.04.2021**

(51) International Patent Classification (IPC):
*H04W 74/08* $^{(2024.01)}$

(52) Cooperative Patent Classification (CPC):
**H04W 74/0833; H04W 74/0836**

(86) International application number:
**PCT/EP2021/060215**

(87) International publication number:
**WO 2021/219434 (04.11.2021 Gazette 2021/44)**

(54) **SECOND MESSAGE DIFFERENTIATION IN RANDOM ACCESS PROCEDURE**

UNTERSCHEIDUNG ZWEITER NACHRICHTEN IN EINEM DIREKTZUGRIFFSVERFAHREN

DIFFÉRENCIATION DE SECOND MESSAGE DANS UNE PROCÉDURE D'ACCÈS ALÉATOIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.04.2020 PCT/CN2020/087792**

(43) Date of publication of application:
**08.03.2023 Bulletin 2023/10**

(73) Proprietor: **Telefonaktiebolaget LM Ericsson (publ)**
**164 83 Stockholm (SE)**

(72) Inventors:
• **LIN, Zhipeng**
**Nanjing, Jiangsu 211100 (CN)**
• **LI, Jingya**
**417 58 Göteborg (SE)**
• **SAHLIN, Henrik**
**435 41 Mölnlycke (SE)**

(74) Representative: **Ericsson**
**Patent Development**
**Torshamnsgatan 21-23**
**164 80 Stockholm (SE)**

(56) References cited:
WO-A1-2016/122055      WO-A1-2018/226026
CA-A1- 3 108 098      US-A1- 2017 094 688

• ZTE CORPORATION ET AL: "Discussion on the ambiguity in calculation of RA-RNTI for Different RACH cases", vol. RAN WG2, no. Online Meeting ;DEFAULT_VALUE, 10 April 2020 (2020-04-10), XP051871515, Retrieved from the Internet <URL:https://ftp.3gpp.org/tsg_ran/WG2_RL2/TSGR2_109bis-e/Docs/R2-2003593.zip R2-2003593- Discussion on the ambiguity in calculation of RA-RNTI.docx> [retrieved on 20200410]
• SAMSUNG: "2 step RACH: RNTI for Receiving Network Response", vol. RAN WG2, no. Prague, Czech Republic; 20190826 - 20190830, 15 August 2019 (2019-08-15), XP051766635, Retrieved from the Internet <URL:http://www.3gpp.org/ftp/tsg_ran/WG2_RL2/TSGR2_107/Docs/R2-1908813.zip> [retrieved on 20190815]
• ZTE CORPORATION: "Discussion on the ambiguity in Msg2 reception", vol. RAN WG2, no. Busan, Korea; 20180521 - 20180525, 18 May 2018 (2018-05-18), XP051519820, Retrieved from the Internet <URL:http://www.3gpp.org/ftp/tsg%5Fran/WG2%5FRL2/TSGR2%5F102/Docs/R2%2D1808424%2Ezip> [retrieved on 20180518]
• SAMSUNG: "RA-RNTI calculation in Rel-13 low complexity MTC", vol. RAN WG2, no. St. Julian's, Malta; 20160215 - 20160219, 14 February 2016 (2016-02-14), XP051055213, Retrieved from the Internet <URL:http://www.3gpp.org/ftp/Meetings_3GPP_SYNC/RAN2/Docs/> [retrieved on 20160214]

**Description**

TECHNICAL FIELD

Disclosed are embodiments related to the random access procedure for establishing a connection with an access point (e.g., 5G base station (gNB)).

BACKGROUND

1. NR Initial Access

Before a user equipment (UE) (i.e., a communication device capable of communicating wirelessly with an access point (e.g., a base station)) can properly communicate within another communication device (e.g., a server), the UE must perform what is known as "cell search" to find, identify, and synchronize with a cell served by an access point. Then, the UE must acquire basic system information, and perform an access barring check to determine whether or not the UE is allowed to use the cell for network connectivity. If the access is allowed, the UE will then perform what is known as a "random access procedure" to establish a connection (e.g., a Radio Resource Control (RRC) connection) with the access point. Examples of UEs include: smartphones, sensors, appliances, meters, computers, servers, etc.

1.1. New Radio (NR) cell search and System Information Acquisition

In NR, the combination of synchronization signals (SSs) and a physical broadcast channel (PBCH) is referred to as a SS/PBCH block (SSB). Similar to LTE, a pair of synchronization signals (i.e., a primary synchronization signal (PSS) and secondary synchronization signal (SSS)) is periodically transmitted on downlink from each cell to allow a UE to initially access to the network. By detecting SS, a UE can obtain the physical cell identity, achieve downlink synchronization in both time and frequency, and acquire the timing for PBCH.
The PBCH carries the master information block (MIB), which contains system information that enables a UE to acquire System Information Block 1 (SIB 1). SIB1 carries system information that enables the UE to perform the random-access procedure.

1.2. NR 4-step random access procedure

The 4-step random access procedure, also referred to as the Type-1 random access procedure in 3GPP TS 38.213. In a first step, a UE initiates the random-access procedure by transmitting a random-access preamble (RAP) (a.k.a., "Message 1" or "Msg 1") on the Physical Random Access Channel (PRACH). After detecting the Msg1, the gNB responds by transmitting to the UE on the Physical Downlink Control Channel (PDCCH) Downlink Control Information (DCI) (e.g., DCI format 1_0) to prepare the UE to receive a random-access response (RAR) (a.k.a., "Message 2" or "Msg2") and then sends the RAR on the Physical Downlink Shared Channel (PDSCH). In the third step, after successfully decoding Msg2, the UE continues the procedure by transmitting message (a.k.a., "Message 3" or "Msg3") on the Physical Uplink Shared Channel (PUSCH). Msg3 is or contains an RRC connection establishment request. In the last step of the procedure, the gNB transmits a message (a.k.a., "Message 4" or "Msg4") on the Physical Downlink Shared Channel (PDSCH) for contention resolution.
It may be the case that more than one UE transmits the same random-access preamble using the same PRACH time/frequency resource. This creates a preamble "collision," which is also called contention. One of the main purposes of applying Step 3 and Step 4 is to resolve such potential contention.

1.3. NR 2-step random access procedure

The 2-step random access produce is also referred to as Type-2 random access procedure in TS 38.213. In the first step, a UE sends on the PUSCH a first message (MsgA) that includes a random access preamble together with higher layer data such as an RRC connection request possibly with some small payload. After detecting the MsgA, the access point sends to the UE DCI (e.g., DCI format 1_0) on the PDCCH and then sends an RAR (a.k.a., "MsgB") which includes a UE identifier assignment, timing advance information, contention resolution message, etc.

2. Msg1 configuration in 4-step random access procedure

In NR, the time and frequency resource on which a random-access preamble (Msg 1) is transmitted is defined as a PRACH occasion.

The time resources and preamble format for the Msg1 transmission is configured by a PRACH configuration index, which indicates a row in a PRACH configuration table specified in 3GPP TS 38.211 tables 6.3.3.2-2, 6.3.3.2-3, 6.3.3.2-4 for FR1 paired spectrum, FR1 unpaired spectrum, and FR2 with unpaired spectrum, respectively.

Part of Table 6.3.3.2-3 for FR1 unpaired spectrum for preamble format 0 is reproduced below in Table 1, where the value of x indicates the PRACH configuration period in number of system frames, and the value of y indicates the system frame within each PRACH configuration period on which the PRACH occasions are configured. For instance, if y is set to 0, then it means PRACH occasions only configured in the first frame of each PRACH configuration period. The values in the column "subframe number" indicates the subframes that are configured with PRACH occasion. The values in the column "starting symbol" is the symbol index.

In case of Time Division Duplexing (TDD), semi-statically configured downlink (DL) parts and/or actually transmitted SSBs can override and invalidate some time-domain PRACH occasions defined in the PRACH configuration table. More specifically, PRACH occasions in the uplink (UL) part are always valid, and a PRACH occasion within the X part is valid as long as it does not precede or collide with an SSB in the RACH slot and it is at least N symbols after the DL part and the last symbol of an SSB. N is 0 or 2 depending on PRACH format and subcarrier spacing.

TABLE 1 PRACH configuration for preamble format 0 for FR1 unpaired spectrum

| PRACH Configuration Index | Preamble format | $n_{SFN}$ mod $x$ = $y$ | | Subframe number | Starting symbol | Number of PRACH slots within a subframe | $N_t^{RA,slot}$, number of time-domain PRACH occasions within a PRACH slot | $N_{dur}^{RA}$, PRACH duration |
|---|---|---|---|---|---|---|---|---|
| | | $x$ | $y$ | | | | | |
| 0 | 0 | 16 | 1 | 9 | 0 | - | - | 0 |
| 1 | 0 | 8 | 1 | 9 | 0 | - | - | 0 |
| 2 | 0 | 4 | 1 | 9 | 0 | - | - | 0 |
| 3 | 0 | 2 | 0 | 9 | 0 | - | - | 0 |
| 4 | 0 | 2 | 1 | 9 | 0 | - | - | 0 |
| 5 | 0 | 2 | 0 | 4 | 0 | - | - | 0 |
| 6 | 0 | 2 | 1 | 4 | 0 | - | - | 0 |
| 7 | 0 | 1 | 0 | 9 | 0 | - | - | 0 |
| 8 | 0 | 1 | 0 | 8 | 0 | - | - | 0 |
| 9 | 0 | 1 | 0 | 7 | 0 | - | - | 0 |
| 10 | 0 | 1 | 0 | 6 | 0 | - | - | 0 |
| 11 | 0 | 1 | 0 | 5 | 0 | - | - | 0 |
| 12 | 0 | 1 | 0 | 4 | 0 | - | - | 0 |
| 13 | 0 | 1 | 0 | 3 | 0 | - | - | 0 |
| 14 | 0 | 1 | 0 | 2 | 0 | - | - | 0 |
| 15 | 0 | 1 | 0 | 1,6 | 0 | | | 0 |
| 16 | 0 | 1 | 0 | 1,6 | 7 | - | - | 0 |
| 17 | 0 | 1 | 0 | 4,9 | 0 | - | - | 0 |
| 18 | 0 | 1 | 0 | 3,8 | 0 | - | - | 0 |
| 19 | 0 | 1 | 0 | 2,7 | 0 | - | - | 0 |
| 20 | 0 | 1 | 0 | 8,9 | 0 | - | - | 0 |
| 21 | 0 | 1 | 0 | 4,8,9 | 0 | - | - | 0 |
| 22 | 0 | 1 | 0 | 3,4,9 | 0 | - | - | 0 |

(continued)

| PRACH Configuration Index | Preamble format | $n_{\text{SFN}} \bmod x = y$ | | Subframe number | Starting symbol | Number of PRACH slots within a subframe | $N_{\text{t}}^{\text{RA,slot}}$, number of time-domain PRACH occasions within a PRACH slot | $N_{\text{dur}}^{\text{RA}}$, PRACH duration |
|---|---|---|---|---|---|---|---|---|
| | | $x$ | $y$ | | | | | |
| 23 | 0 | 1 | 0 | 7,8,9 | 0 | - | - | 0 |
| 24 | 0 | 1 | 0 | 3,4,8,9 | 0 | - | - | 0 |
| 25 | 0 | 1 | 0 | 6,7,8,9 | 0 | - | - | 0 |
| 26 | 0 | 1 | 0 | 1,4,6,9 | 0 | - | - | 0 |
| 27 | 0 | 1 | 0 | 1,3,5,7,9 | 0 | - | - | 0 |

In the frequency domain, NR supports multiple frequency-multiplexed PRACH occasions on the same time-domain PRACH occasion. This is mainly motivated by the support of analog beam sweeping in NR such that the PRACH occasions associated to one SSB are configured at the same time instance but at different frequency locations. The starting position in the frequency is indicated by the higher-layer parameter *msg1-FrequencyStart* in SIB1, and the number of consecutive PRACH occasions frequency division multiplexed (FDMed) in one time instance is configured by the higher-layer parameter *msg1-FDM* in SIB1. The number of PRACH occasions FDMed in one time domain PRACH occasion can be 1, 2, 4, or 8.

Here the msg1-FDM and *msg1-FrequencyStart* are defined in 3GPP TS 38.331 as follows: 1) "msg1-FDM : The number of PRACH transmission occasions FDMed in one time instance"; 2) "msg1-FrequencyStart : Offset of lowest PRACH transmission occasion in frequency domain with respective to PRB 0. The value is configured so that the corresponding RACH resource is entirely within the bandwidth of the UL BWP." The msg1-FDM information element (IE) and msg1-FrequencyStart IE are part of the RACH-ConfigGeneric IE, which is shown in Table 2 below.

TABLE 2: RACH-ConfigGeneric information element

```
-- ASN1START
-- TAG-RACH-CONFIG-GENERIC-START

RACH-ConfigGeneric ::=   SEQUENCE {
    prach-ConfigurationIndex      INTEGER (0..255),
    msg1-FDM                      ENUMERATED {one, two, four, eight},
    msg1-FrequencyStart           INTEGER (0..maxNrofPhysicalResourceBlocks-1),
    zeroCorrelationZoneConfig     INTEGER(0..15),
    preambleReceivedTargetPower   INTEGER (-202..-60),
    preambleTransMax              ENUMERATED {n3, n4, n5, n6, n7, n8, n10, n20,
                                             n50, n100, n200},
    powerRampingStep              ENUMERATED {dB0, dB2, dB4, dB6},
    ra-ResponseWindow             ENUMERATED {sl1, sl2, sl4, sl8, sl10, sl20,
                                             sl40, sl80},
    ...
}

-- TAG-RACH-CONFIG-GENERIC-STOP
-- ASN1STOP
```

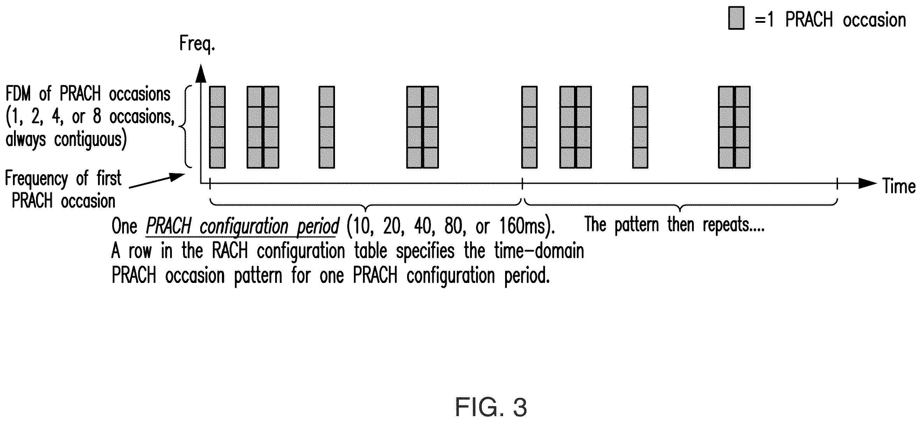

FIG. 3 gives an example of the PRACH occasion configuration in NR.

In NR release fifteen (Rel-15), there are up to 64 sequences that can be used as random-access preambles per PRACH occasion in each cell. The RRC parameter totalNumberOfRA-Preambles determines how many of these 64 sequences are used as random-access preambles per PRACH occasion in each cell. The 64 sequences are configured by including firstly all the available cyclic shifts of a root Zadoff-Chu sequence, and secondly in the order of increasing root index, until 64 preambles have been generated for the PRACH occasion.

3. MsgA configuration in 2-step random access procedure

3.1 MsgA preamble configuration

The RACH occasions for 2-step RACH can be separately configured (also known as Type-2 random access procedure with separate configuration of PRACH occasions with Type-1 random access procedure) or are shared with 4-step RACH (also known as Type-2 random access procedure with common configuration of PRACH occasions with Type-1 random access procedure) in which case different set of preamble IDs will be used.

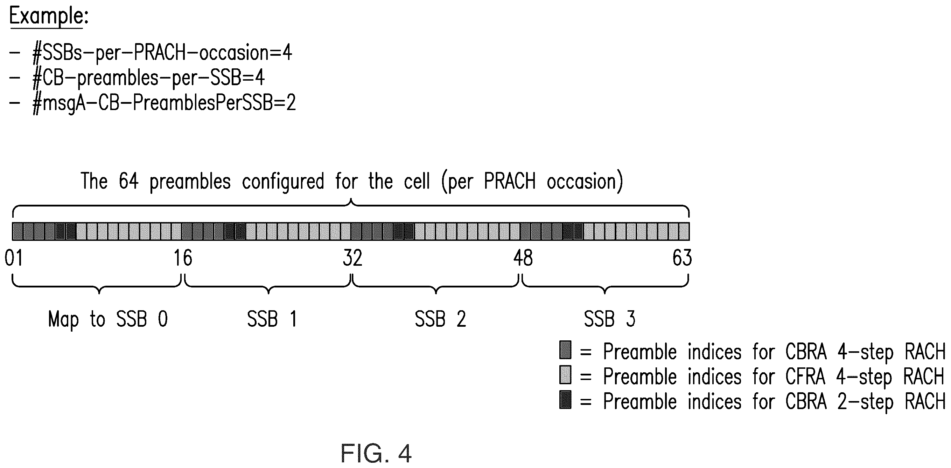

For Type-2 random access procedure with common configuration of PRACH occasions with Type-1 random access procedure, a UE is provided a number of SS/PBCH blocks associated with one PRACH occasion by *ssb-perRACH-OccasionAndCB-PreamblesPerSSB* and a number of contention based preambles per SS/PBCH block per valid PRACH occasion by *msgA-CB-PreamblesPerSSB.* The PRACH transmission can be on a subset of PRACH occasions associated with a same SS/PBCH block index for a UE provided with a PRACH mask index by *msgA-ssb-sharedRO-MaskIndex.* An example of the SSB to PRACH occasion mapping and the preamble allocation is provided in FIG. 4 Note that only one preamble group is assumed in this example.

For Type-2 random access procedure with separate configuration of PRACH occasions with Type-1 random access procedure, a UE is provided a number per SS/PBCH blocks associated with one PRACH occasion and a number of contention based preambles per SS/PBCH block per valid PRACH occasion by *ssb-perRACH-OccasionAndCB-PreamblesPerSSB-msgA* when provided; otherwise, by *ssb-perRACH-OccasionAndCB-PreamblesPerSSB.* Since the SSB to PRACH occasion mapping and the preamble allocation are independently configured, the example provided for 4-step RACH is also valid for this case of 2-step RACH except that the parameters are separately configured for 2-step RACH.

3.2 MsgA PUSCH Configuration

A PUSCH occasion is defined as the time frequency resource used for one PUSCH transmission. For one msgA PUSCH occasion, one or more Downlink Modulation Reference Signals (DMRS) resources can be configured, one of which will be selected for each PUSCH transmission within the PUSCH occasion.

A set of PUSCH occasions are configured per MsgA PUSCH configuration which are relative to and mapped by a group of preambles in a set of PRACH occasions in one PRACH slot. A mapping between one or multiple PRACH preambles and a PUSCH occasion associated with a DMRS resource is according to the mapping order as described below.

Each consecutive number of $N_{preamble}$ preamble indexes from valid PRACH occasions in a PRACH slot,

- first, in increasing order of preamble indexes within a single PRACH occasion,

- second, in increasing order of frequency resource indexes for frequency multiplexed PRACH occasions,

- third, in increasing order of time resource indexes for time multiplexed PRACH occasions within a PRACH slot,

are mapped to a valid PUSCH occasion and the associated DMRS resource,

- first, in increasing order of frequency resource indexes $f_{id}$ for frequency multiplexed PUSCH occasions,

- second, in increasing order of DMRS resource indexes within a PUSCH occasion, where a DMRS resource index $DMRS_{id}$ is determined first in an ascending order of a DMRS port index and second in an ascending order of a DMRS sequence index,

- third, in increasing order of time resource indexes $t_{id}$ for time multiplexed PUSCH occasions within a PUSCH slot,

- fourth, in increasing order of indexes for $N_s$ PUSCH slots,

where $N_{preamble} = ceil(T_{preamble}/T_{PUSCH})$, $T_{preamble}$ is a total number of valid PRACH occasions per association pattern period multiplied by the number of preambles per valid PRACH occasion provided by *msgA-PUSCH-PreambleGroup,* and $T_{PUSCH}$ is a total number of valid PUSCH occasions per PUSCH configuration per association pattern period multiplied by the number of DMRS resource indexes per valid PUSCH occasion provided by *msgA-DMRS-Config.*

4. RNTI for the 2nd Message in the Random Access Procedure

Table 3 provides the range of RNTI values, where RA-RNTI and MSGB-RNTI are defined for msg2 and MsgB in 4-step random access procedure and 2-step random access procedure, respectively.

TABLE 3 RNTI values

| Value (hexa-decimal) | RNTI |
| --- | --- |
| 0000 | N/A |
| 0001-FFEF | RA-RNTI, MSGB-RNTI, Temporary C-RNTI, C-RNTI, MCS-C-RNTI, CS-RNTI, TPC-PUCCH-RNTI, TPC-PUSCH-RNTI, TPC-SRS-RNTI, INT-RNTI, SFI-RNTI, and SP-CSI-RNTI |
| FFF0-FFFD | Reserved |
| FFFE | P-RNTI |
| FFFF | SI-RNTI |

RA-RNTI or MSGB-RNTI are used for the CRC scrambling for DCI format 1_0 which is used for scheduling of Msg2 or MsgB PDSCH transmission. The following information is transmitted by means of the DCI format 1_0 with CRC scrambled by RA-RNTI or msgB-RNTI:

- Frequency domain resource assignment - $\left\lceil \log_2 (N_{RB}^{DL,BWP} (N_{RB}^{DL,BWP} + 1)/2) \right\rceil$ bits

  - $N_{RB}^{DL,BWP}$ is the size of CORESET 0 if CORESET 0 is configured for the cell and $N_{RB}^{DL,BWP}$ is the size of initial DL bandwidth part if CORESET 0 is not configured for the cell
- Time domain resource assignment - 4 bits as defined in Clause 5.1.2.1 of [6, TS38.214]
- VRB-to-PRB mapping - 1 bit according to Table 7.3.1.2.2-5
- Modulation and coding scheme - 5 bits as defined in Clause 5.1.3 of [6, TS38.214], using Table 5.1.3.1-1
- TB scaling - 2 bits as defined in Clause 5.1.3.2 of [6, TS38.214]
- LSBs of SFN - 2 bits for the DCI format 1_0 with CRC scrambled by msgB-RNTI or 2 bits as defined in Clause 8 of [5, TS 38.213] for operation in a cell with shared spectrum channel access; 0 bit otherwise
- Reserved bits - 14 bits for the DCI format 1_0 with CRC scrambled by msgB-RNTI or for operation in a cell with shared spectrum channel access; otherwise 16 bits

4.1 RA-RNTI for message 2 in 4-step random access procedure

After transmission of msg1, UE will monitor the PDCCH for DCI with its CRC scrambled by RA-RNTI within a RAR window for receiving msg2.

The RA-RNTI is used for UEs for msg2 reception except for contention-free Random Access Preamble for beam failure recovery request where a C-RNTI is used.

The RA-RNTI associated with the PRACH occasion in which the Random Access Preamble is transmitted, is computed as:

$$RA\text{-}RNTI = 1 + s\_id + 14 \times t\_id + 14 \times 80 \times f\_id + 14 \times 80 \times 8 \times ul\_carrier\_id$$

where:

s_id is the index of the first Orthogonal Frequency Demultiplexing (OFDM) symbol of the PRACH occasion ($0 \leq s\_id < 14$),

t_id is the index of the first slot of the PRACH occasion in a system frame ($0 \leq t\_id < 80$),

f_id is the index of the PRACH occasion in the frequency domain ($0 \leq f\_id < 8$), and

ul_carrier_id (a.k.a., ul_c_id) is the UL carrier used for Random Access Preamble transmission (0 for NUL carrier, and 1 for SUL carrier).

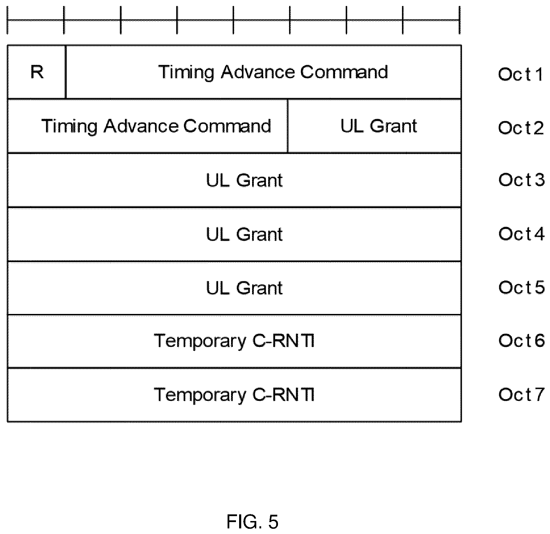

The MAC RAR is octet aligned, and it provides the temporary C-RNTI for the message 3 and message 4, as shown in FIG. 5.

4.2 MSGB-RNTI for MsgB in 2-step random access procedure

After transmission of MsgA, UE will monitor the PDCCH for a DCI with its CRC scrambled by MSGB-RNTI with in a RAR window for receiving MsgB.

The MSGB-RNTI associated with the PRACH occasion in which the Random Access Preamble is transmitted, is computed as:

$$MSGB\text{-}RNTI =$$

$$1 + s\_id + 14 \times t\_id + 14 \times 80 \times f\_id + 14 \times 80 \times 8 \times ul\_carrier\_id + 14 \times 80 \times 8 \times 2,$$

where $s\_id$ is the index of the first OFDM symbol of the PRACH occasion ($0 \leq s\_id < 14$), $t\_id$ is the index of the first slot of the PRACH occasion in a system frame ($0 \leq t\_id < 80$), where the subcarrier spacing to determine $t\_id$ is based on the value of $\mu$ specified in clause 5.3.2 in TS 38.211, $f\_id$ is the index of the PRACH occasion in the frequency domain ($0 \leq f\_id < 8$), and $ul\_carrier\_id$ is the UL carrier used for Random Access Preamble transmission (0 for NUL carrier, and 1 for SUL carrier).

As can be seen, a fixed offset of $14 \times 80 \times 8 \times 2$ is added to *RA-RNTI* to form *MSGB-RNTI* so that the RA-RNTI and MSGB-RNTI calculated based on same RACH occasion will have different values.

The RAR for MsgB can be success RAR when both MsgA preamble and MsgA PUSCH are decoded or fallback RAR when only preamble part is detected while MsgA PUSCH failed to be decoded.

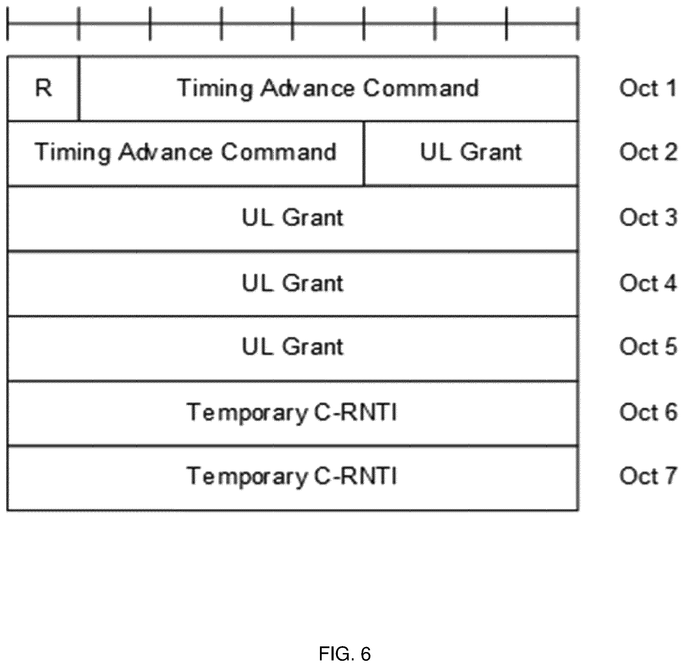

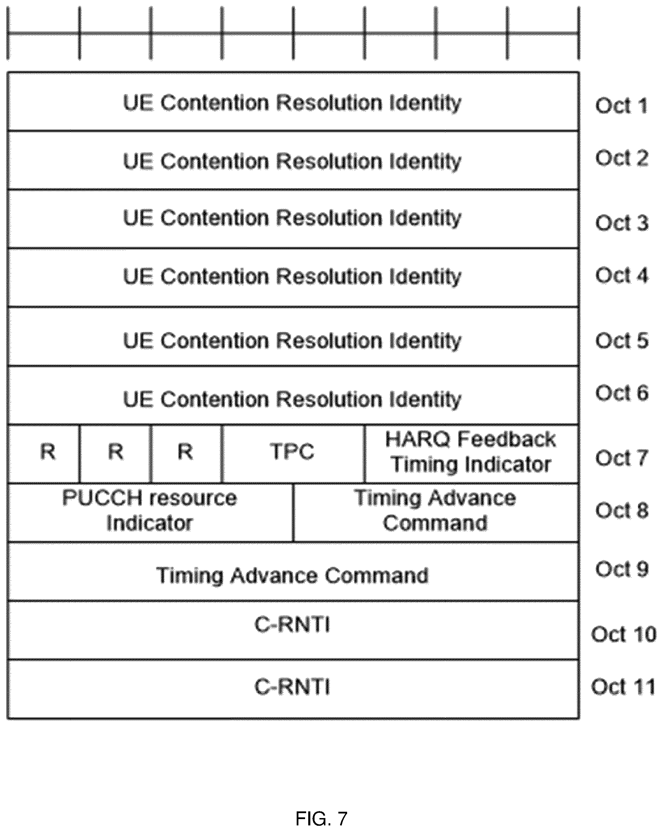

The fallbackRAR is octet aligned and has a structure shown in FIG. 6. The successRAR is octet aligned and has the structure illustrated in FIG. 7.

5. RRC Establishment Cause for UE Differentiation

In step 3 of the 4-step random access procedure, a UE includes the *rrcSetupRequest* message in Msg3. The *rrcSetupRequest* message contains the IE *establishmentCause*, which indicates the reason that caused the UE to initiate the connection establishment, e.g., emergency call, mission critical services, multimedia priority services, etc.

A gNB identifies the type of connection request from the UE by decoding the establishmentCause IE received in msg3, based on which, the gNB decides whether this request shall be admitted or rejected, based on the network traffic load situation and available resource in the network.

The patent document CA 3 108 098 A1 discloses a random access procedure. A UE sends a random access preamble to a base station and receives a random access response RAR. From the contents of the RAR, the UE determines if the RAR is intended for it, or not. In this way, the base station may allow differentiated admission control.

SUMMARY

Certain challenges presently exist. For instance, based on the NR Rel-15 and Rel-16 4-step RACH procedure, during an initial access phase, the earliest time for a network node to identify a particular type of UE (e.g., a mission critical (MC) UE such as a UE configured with MC services) is in step 3 of the RACH procedure (i.e., after a successful reception of the RRC establishment cause in msg3 transmitted by the UE). In addition, according current NR standard (NR Rel-15 and Rel-16), the establishmentCause for all MC UEs will be set to mcs-Priority Access. This implies that a network node can't further differentiate between different MC UEs in an initial access procedure.

For a 2-step RA procedure, on whether msgA PUSCH or msgA preamble part are used to identify an MC UE, it should take into account that the reliability of msgA preamble part and PUSCH part might be quite different due to the PUSCH is colliding in 2-step RACH. In another aspect, the msgA PUSCH resource used for higher priority may need to be prioritized so that the msgA PUSCH performance can be assured especially if msgA preamble part cannot be used for UE priority identification.

Hence, early UE differentiation via msg1 PRACH configuration in 4-step RA or msgA PRACH configuration in 2-step RA is needed. It has been proposed to use different first message configuration methods to support early differentiation between different UE types (e.g., different UE priorities) during random access procedure. When different PRACH configurations are configured for UEs with different types, there can be cases that the preambles transmitted from UEs with different priority levels are mapped to the same RA-RNTI or MsgB-RNTI value. This makes it difficult for the network to prioritize the RAR transmissions for a particular category of UEs (e.g., high priority UEs) in the second step of a random access procedure.

In an embodiment, a method performed by a first UE includes the first UE transmitting a random access, RA, preamble to an access point using a Physical Random Access Channel, PRACH, configuration. The method also includes the first UE receiving a message transmitted by the access point, wherein the message includes a priority value indicating a priority level or the message is associated with the priority value, and the priority value included in or associated with the message is based on the PRACH configuration that was used by the UE to transmit the RA preamble. The method also includes the first UE determining a priority value included in or associated with the message. The method also includes the first UE determining, based on the priority value, whether or not the message is intended for a UE other than the first UE. The message is a downlink control message that was received within a RA response, RAR, window, or the message is a first RA response.

Further embodiments relate to a corresponding computer program which causes a UE to perform the method, corresponding carriers, a computer readable storage medium and a user equipment, UE.

The embodiments are advantageous in that they each provide a way for differentiating the 2nd message transmissions for UEs of different priorities (e.g., UEs with different priorities), when different PRACH configurations are used for different UE types in the 1st step of the random access procedure. The embodiments solve the potential ambiguity issue when the preambles transmitted from UEs with different types (e.g. ,priority levels) would otherwise be mapped to the same RA-RNTI or MsgB-RNTI value. The proposed embodiments also enable more flexible prioritization of RAR transmissions for a particular category of UEs (e.g., high priority UEs).

BRIEF DESCRIPTION OF THE DRAWINGS

The accompanying drawings, which are incorporated herein and form part of the specification, illustrate various embodiments.

FIG. 1 illustrates a 4-step random access produce.
FIG. 2 illustrates a 2-step random access procedure.
FIG. 3 shows an example of the PRACH occasion configuration in NR.
FIG. 4 shows an example of the SSB to PRACH occasion mapping
FIG. 5 shows the MAC RAR is octet aligned, and it provides the temporary C-RNTI for the message 3 and message 4.
FIG. 6 shows the structure of a fallbackRAR.
FIG. 7 shows the structure of a successRAR,
FIG. 8 shows an example where two sets of PRACH occasions are configured separately for a first category of UEs (e.g., high priority UEs) and a second category of UEs (e.g., non-high priority UEs), respectively, according to one embodiment.
FIG. 9 shows an example where two sets of PRACH occasions are configured separately for different types of UEs, according to another embodiment.

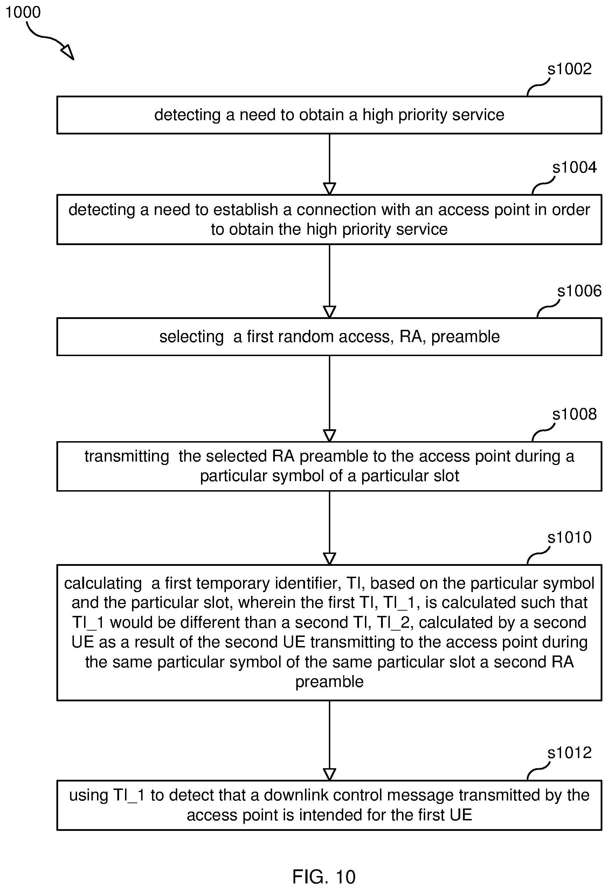

FIG. 10 is a flowchart illustrating a process according to some embodiments.

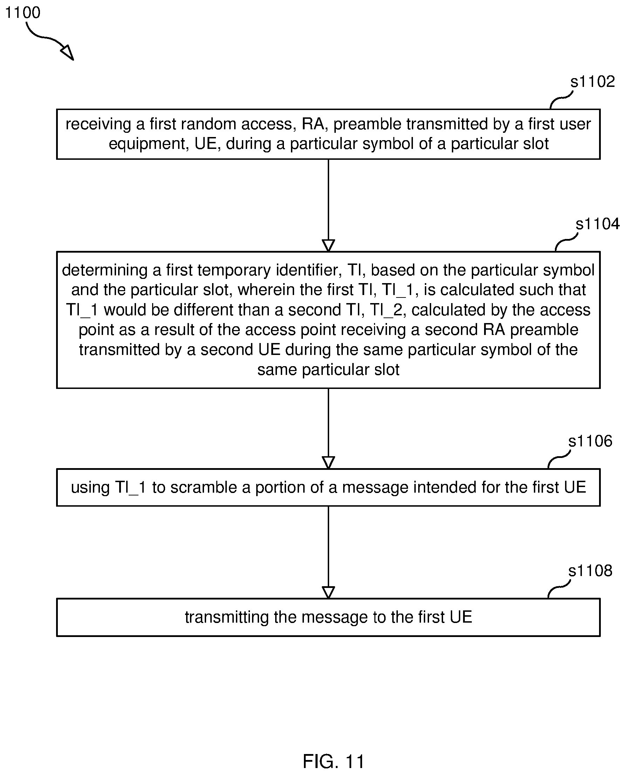

FIG. 11 is a flowchart illustrating a process according to some embodiments.
FIG. 12 is a flowchart illustrating a process according to some embodiments.

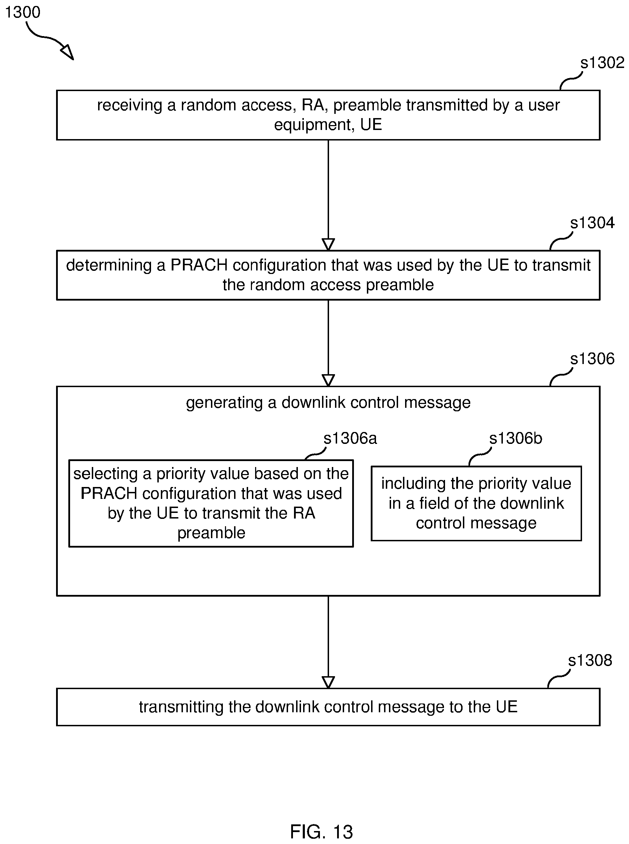

FIG. 13 is a flowchart illustrating a process according to some embodiments.

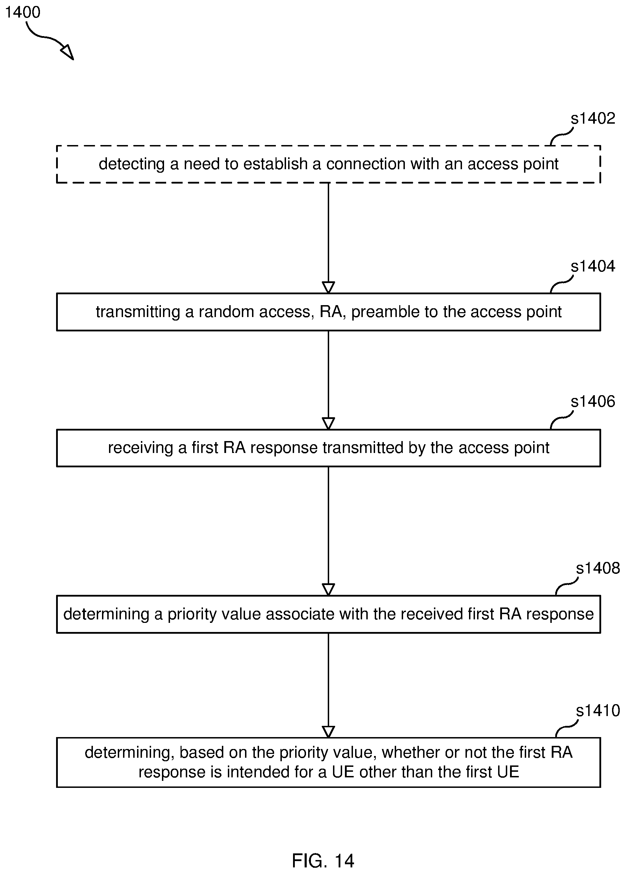

FIG. 14 is a flowchart illustrating a process according to some embodiments.

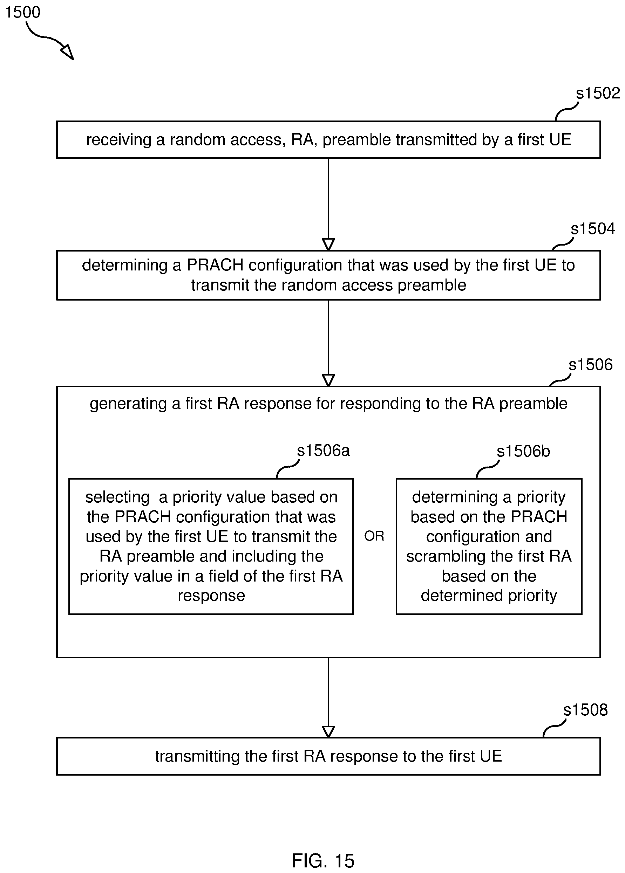

FIG. 15 is a flowchart illustrating a process according to some embodiments.

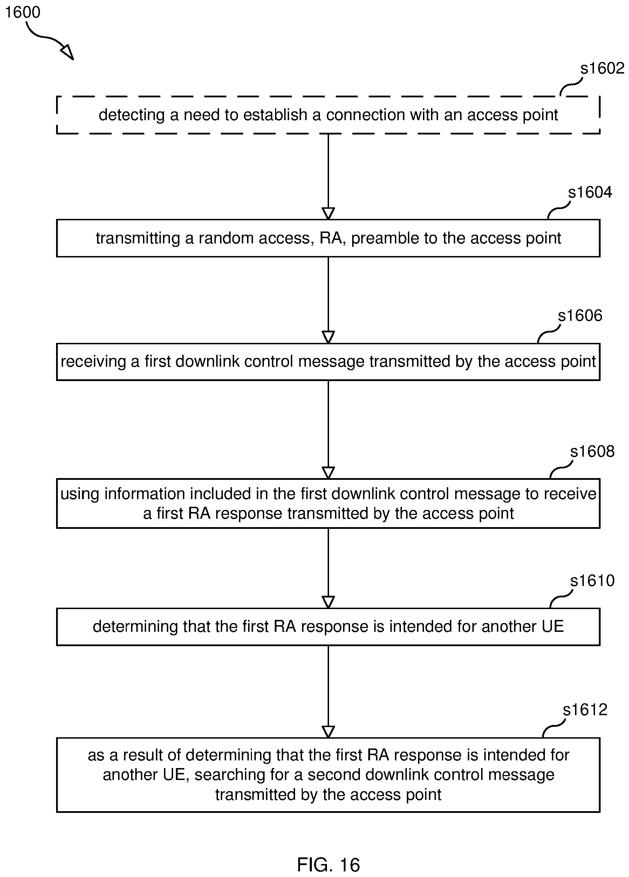

FIG. 16 is a flowchart illustrating a process according to some embodiments.
FIG. 17 illustrates a network node according to some embodiments.
FIG. 18 illustrates a UE according to some embodiments.
FIG. 19 is a flowchart illustrating a process according to some embodiments.

DETAILED DESCRIPTION

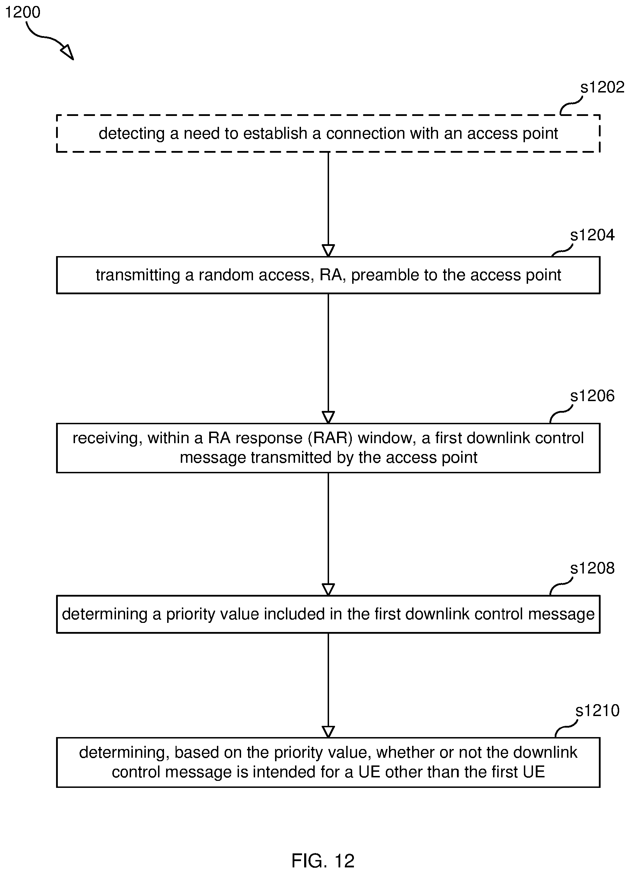

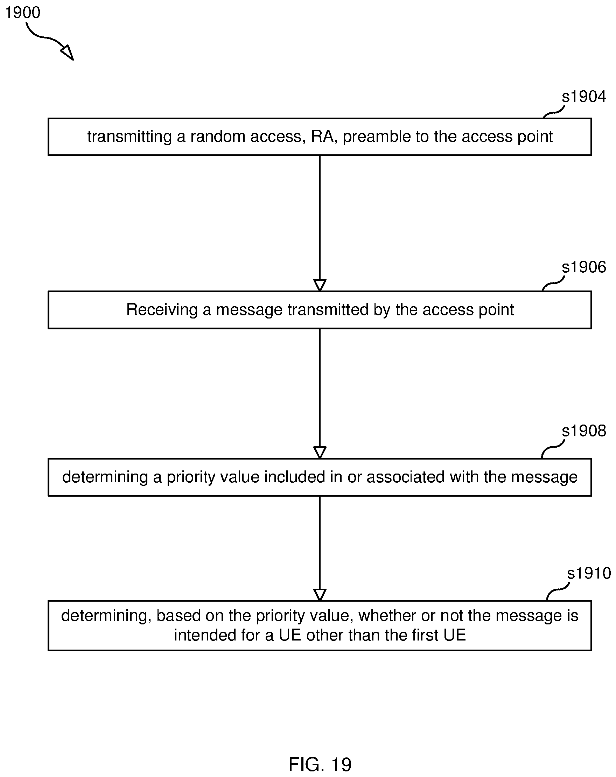

The invention relates in particular to the embodiments described with reference to figures 12 and 19. The other embodiments are further examples useful for understanding the invention.

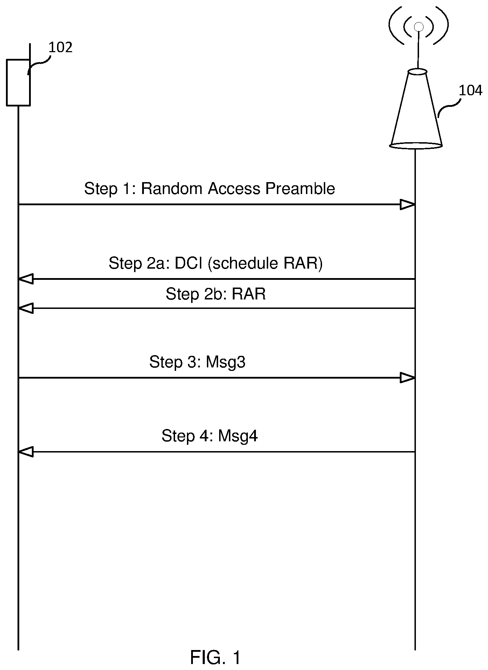

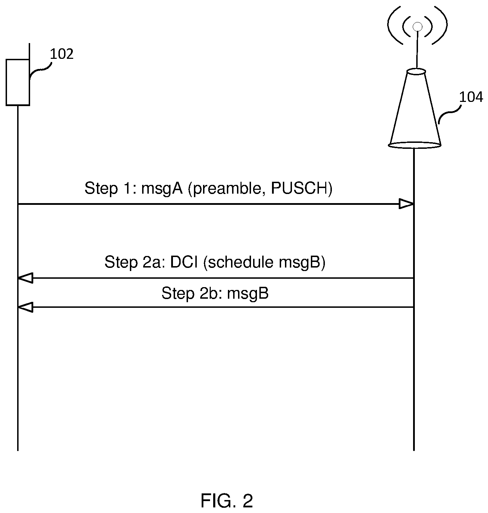

FIG. 1 illustrates a random access (RA) procedure being performed by a UE 102. This RA procedure can be used by UEs to establish a connection (e.g., a Radio Resource Control (RRC) connection) with a network node 104 (e.g., an access point, which is also known as a base station). The RA procedure shown in FIG. 1 is the 4-step RA procedure, also referred to as the Type-1 random access procedure in 3GPP TS 38.213, but other RA procedures exist (e.g., the 2-step RA procedure, which is shown in FIG. 2). In a first step, UE 102 initiates the RA procedure by transmitting a random-access preamble (RAP) (a.k.a., "Message 1" or "Msg 1") on the Physical Random Access Channel (PRACH). After detecting the Msg1, the network node 104 (e.g., a 5G base station (gNB)) responds by transmitting to the UE on the Physical Downlink Control Channel (PDCCH) Downlink Control Information (DCI) (e.g., DCI format 1_0) to prepare the UE to receive a random-access response (RAR) (a.k.a., "Message 2" or "Msg2") and then sends the RAR on the Physical Downlink Shared Channel (PDSCH). In the third step, after successfully decoding Msg2, the UE 102 continues the procedure by transmitting a message (a.k.a., "Message 3" or "Msg3") on the Physical Uplink Shared Channel (PUSCH). Msg3 is or contains an RRC connection establishment request. In the last step of the procedure, the gNB transmits a message (a.k.a., "Message 4" or "Msg4") on the Physical Downlink Shared Channel (PDSCH) for contention resolution. Msg3 includes a *rrcSetupRequest* message, which contains the *establishmentCause* Information Element (IE) which contains a value indicating the reason that caused the UE 102 to initiate the connection establishment, e.g., emergency call, mission critical services, multimedia priority services, etc. The network node 104 identifies the type of connection request being requested by UE 102 by decoding the establishmentCause IE received in msg3, based on which, the network node 104 decides whether this request shall be admitted or rejected, based on the network traffic load situation and available resource in the network.

The 2-step random access produce, also referred to as Type-2 random access procedure in TS 38.213, is illustrated in FIG. 2. In the first step, a UE sends on the PUSCH a first message (MsgA) that includes a random access preamble together with higher layer data such as an RRC connection request possibly with some small payload. After detecting the MsgA, the access point sends to the UE DCI (e.g., DCI format 1_0) on the PDCCH and then sends an RAR (a.k.a., "MsgB") which includes a UE identifier assignment, timing advance information, contention resolution message, etc.

UEs are pre-configured to different groups depending on the UE or/and service priority. For example, different priority groups can be defined based on the UE Access Identity numbers or/and the Access Categories.

A network node can configure different PRACH configurations for different UE/service groups that are associated to different priorities. A UE selects which configuration to use for random-access preamble transmission based on its associated priority group. By detection of the random-access preamble transmitted from a UE, the network node can identify the UE priority, and thereby making an early decision on differentiated admission control for this UE.

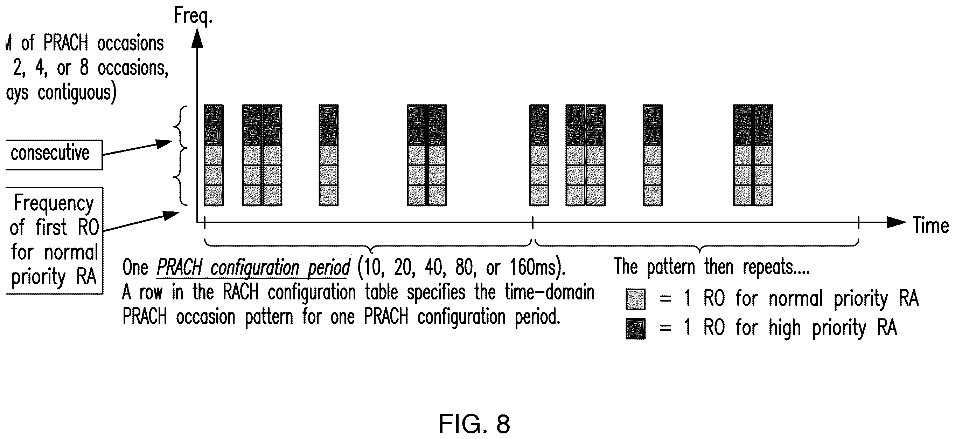

For example, as illustrated in FIG. 8, two sets of PRACH occasions are configured separately for normal priority and high priority UEs respectively, assuming 2 levels of UE priority are defined.

To be able to differentiate the 2nd message when the PRACH occasions are separately configured, the following embodiments are described.

1. Different RA-RNTI or MSGB-RNTI values for different PRACH occasion sets configured for UE priority or service priority.

*1.1 Offsets*

In one embodiment, an offset is added to generate different RA-RNTI or MSGB-RNTI values for different priority UEs. As an example, one offset is added to a RA-RNTI or MSGB-RNTI for the high priority UE if two priorities are defined, i.e. "normal priority UE" and "high priority UE", as shown below:

$$RARNTI_{highPrio} = RARNTI + RNTI_{offset} \text{ for 4-step RA}$$

$$MSGBRNTI_{highPrio} = MSGBRNTI + RNTI_{offset} \text{ for 2-step RA}$$

where the $RNT1_{offset}$ can depend on maximum value of the RA-RNTI or MSGB-RNTI according to the actual PRACH configuration (e.g., 2-step RA or 4-step RA) for the normal priority UE such that:

$$RNTI_{offset} = 14 \times 80 \times 8 \times 4 \text{ for 4-step RA}$$

$$RNTI_{offset} = 14 \times 80 \times 8 \times 6 \text{ for 2-step RA} .$$

If more than 2 priorities are defined, different offset values can be added in the RNTI calculation to make sure that RNTI values for different priorities are unique.

In one example, when only the 4-step RACH is supported in the cell, the $RNTI_{offset}$ can be $14 \times 80 \times 8 \times 2$ for high priority UEs, i.e. MSGB-RNTI values used for legacy2-step RA is used by high priority UEs in this cell for 4-step RA procedure.

In another example, when only 2-step RACH is supported in the cell, the $RNTI_{offset}$ can be $-14 \times 80 \times 8 \times 2$ for high priority UEs, i.e. the RA-RNTIs used for legacy 4-step RACH will be used for high priority UEs in this cell for 2-step RA procedure.

In one embodiment, an offset can be added to the ID of PRACH occasions in frequency domain *f_id*. As an example, two groups of PRACH occasions are separately configured, one for normal priority UEs, the other for high priority UEs, then the *f_id high* for high priority UEs can be:

$$f\_id\_high = f\_id + f\_id\_offset$$

where the *f_id* is the PRACH occasion index in frequency domain for normal priority UEs, *f_id_offset* can be the number of PRACH occasions FDMed for normal priority UEs.

*1.2 Include the PRACH occasions for PRACH preambles corresponding to all priority classes when calculating the RA-RNTI or MSGB-RNTI although the PRACH occasions may be separately configured.*

As an example, the s_id, t_id, and f_id, as described above, which are used in calculating the RNTI, can be for the PRACH occasions for UEs with all priorities within one NR frame, i.e. 10ms.

$RA\text{-}RNTI = 1 + s\_id + 14 \times t\_id + 14 \times 80 \times f\_id + 14 \times 80 \times 8 \times ul\_carrier\_id$ $MSGB\text{-}RNTI = 1 + s\_id + 14 \times t\_id + 14 \times 80 \times f\_id + 14 \times 80 \times 8 \times ul\_carrier\_id + 14 \times 80 \times 8 \times 2$

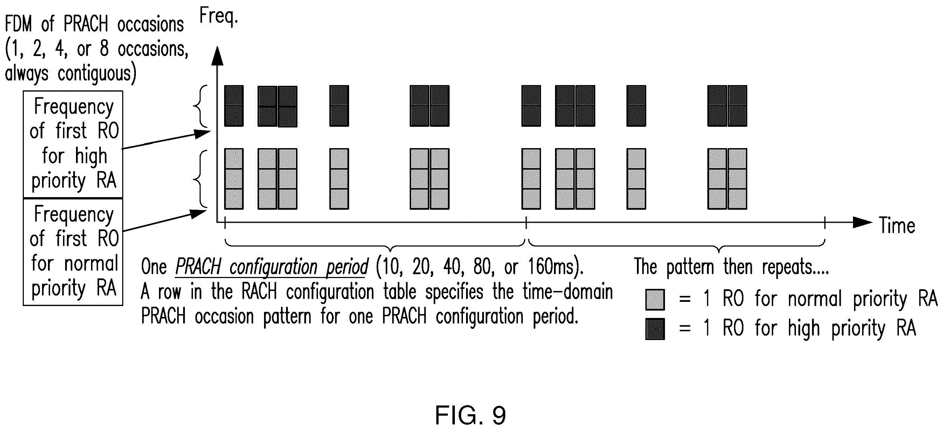

For the number f_id, it can be numbered within a range of total possible PRACH occasions for all PRACH configurations for different UE priorities, e.g. in FIG. 9, two PRACH occasion sets are configured for 2 priorities of UEs, where f_id will be from 0 to 4, since there're totally 5 PRACH occasions (3 for normal priority RA, 2 for high priority RA) on different PRBs. Note that even if the high priority PRACH occasions do not overlap with normal priority PRACH occasions in time domain, the number of PRACH occasions FDMed are still 5 as long as they're not on the same PRBs.

In a variant of this embodiment, the network configures the number of FDMed PRACH occasions for legacy UEs (e.g. msg1-FDM in SIB1) and the number of FDMed PRACH occasions for high priority UEs (e.g., msg1-FDM-HighPriority in SIB1) such that the total number of PRACH occasions multiplexed in frequency for all priority levels (e.g., msg1-FDM+ msg1-FDM-HighPriority) is less than or equal to 8.

In addition, the value of f_id to be used for deriving RA-RNTI or MSGB-RNTI for high priority UEs is defined as msg1-FDM<= f_id< msg1-FDM+ msgl-FDM-HighPriority.

With this method, the formula of the RA-RNTI and MSGB-RNTI will not be changed.

In another variant of this embodiment, the maximum number of PRACH occasions in frequency for all UE priorities with different PRACH configurations is more than 8, in which case the formula will be updated according to the maximum number PRACH occasions on different PRBs, say F_ID_MAX:

$$RA\text{-}RNTI = 1 + s\_id + 14 \times t\_id + 14 \times 80 \times f\_id + 14 \times 80 \times F\_ID\_MAX \times ul\_carrier\_id$$

$MSGB\text{-}RNTI = 1 + s\_id + 14 \times t\_id + 14 \times 80 \times f\_id + 14 \times 80 \times F\_ID\_MAX \times ul\_carrier\_id + 14 \times 80 \times F\_ID\_MAX \times 2.$

In some sub-embodiment of this variant, the maximum number of PRACH occasions on different PRBs for all UE priorities with different PRACH configurations may be determined based on the number of PRACH configurations.

For example, for each PRACH configuration, the maximum number of PRACH occasions is 8, and the total number PRACH occasions multiplexed in frequency can be 8*N PRACH occasions, where N is the number of PRACH configurations for different priority of UEs or services. E.g. the RNTI can be calculated in below formulas, where F_ID_MAX_PerRACHConfig means maximum number of ROs per PRACH configuration, and N is the number of PRACH configurations:

$RA\text{-}RNTI = 1 + s\_id + 14 \times t\_id + 14 \times 80 \times f\_id + 14 \times 80 \times F\_ID\_MAX\_PerRACHConfig \text{ x } N \times ul\_carrier\_id;$

$MSGB\text{-}RNTI = 1 + s\_id + 14 \times t\_id + 14 \times 80 \times f\_id + 14 \times 80 \times F\_ID\_MAX\_PerRACHConfig \text{ x } N \times ul\_carrier\_id + 14 \times 80 \times F\_ID\_MAX\_PerRACHConfig \text{ x } N \times 2.$

Note that even for the case where different UE priorities share the same PRACH occasion configuration but are differentiated by using different sets of preamble indexes per PRACH occasion, it can be still be beneficial to use the above proposed methods to design different RA-RNTI or MSGB-RNTI values for different UE priorities. By doing so, the transmission of RARs associated to different UE priorities can be scheduled and handled independently.

*2. The same RA-RNTI or MSGB-RNTI is allowed for different PRACH occasion sets configured for different UE or service priorities.*

If the legacy equations for calculating the value of RA-RNTI or MSGB-RNTI are reused for all levels of UE priorities, then, differentiation of the Msg2 or MsgB transmission for different priority UEs can be enabled by either adding priority level indication in the DCI scheduling Msg2/MsgB, or adding priority level indication in associated RAR.

*2.1 Indicate the UE or service priority level in a DCI scheduling RAR or msgB.*

With this method, a UE can check both the RA-RNTI/MSGB-RNTI value and the priority indication field in the DCI to determine whether the PDCCH is expected for scheduling its corresponding RAR.

As an example of embodiment 3, shown below, a 2-bit field "Priority level" is added in the DCI to indicate the priority of the UE/Service.

UE-Priority field can be defined in below table and included in the DCI, where the large the value is, the higher the priority is.

| Priority level | |
| --- | --- |
| 0 | Normal |
| 1 | Priority 3 |
| 2 | Priority 2 |
| 3 | Priority 1 |

The following information is transmitted by means of the DCI format 1_0 (with CRC scrambled by RA-RNTI or msgB-RNTI):

- Frequency domain resource assignment - $\left\lceil \log_2(N_{RB}^{DL,BWP}(N_{RB}^{DL,BWP}+1)/2) \right\rceil$ bits;

- $N_{RB}^{DL,BWP}$ is the size of CORESET 0 if CORESET 0 is configured for the cell and $N_{RB}^{DL,BWP}$ is the size of initial DL bandwidth part if CORESET 0 is not configured for the cell;
- Time domain resource assignment - 4 bits as defined in Clause 5.1.2.1 of TS 38.214;
- VRB-to-PRB mapping - 1 bit according to Table 7.3.1.2.2-5;
- Modulation and coding scheme - 5 bits as defined in Clause 5.1.3 of TS 38.214, using Table 5.1.3.1-1;
- TB scaling - 2 bits as defined in Clause 5.1.3.2 of TS 38.214;
- LSBs of SFN - 2 bits for the DCI format 1_0 with CRC scrambled by msgB-RNTI or 2 bits as defined in Clause 8 of TS 38.213 for operation in a cell with shared spectrum channel access; 0 bit otherwise;
- Priority level - 2 bits to indicate the priority of the UE to which the RAR is targeted;
- Reserved bits - 12 bits for the DCI format 1_0 with CRC scrambled by msgB-RNTI or for operation in a cell with shared spectrum channel access; otherwise 14 bits.

*2.2 A UE monitors all possible RA-RNTI addressed or MsgB-RNTI addressed PDCCHs in order to decode its associated RAR/MsgB.*

This means when multiple PRACH configurations are configured, UE needs to determine the maximum number of PDCCHs with CRC scrambled by same RA-RNTI or MSGB-RNTI value to be monitored within the RAR window, based on the PRACH configurations from the network. UE will continue monitor the PDCCHs for RAR until the maximum number of PDCCHs reached or until an expected RAR (e.g. associated to its priority level or associated to it's UE ID) is decoded.

As an example, in FIG. 9, assuming we number the ROs in frequency domain to be RO 0, RO 1, RO 2, RO 3, RO4 from the lower frequency to high frequency, RO 0, RO1, RO2 are configured for normal priority UEs, RO 3 and RO 4 are configured for high priority UEs. If a high priority UE selects an RO 3 for a 4-step random access, then same RA-RNTI addressed RARs may be received from normal priority UEs on RO 0 since RO 3 and RO 0 have same values of $s\_id, t\_id,$ and $f\_id$ in the formula for RA-RNTI calculation as described in section 2.1.4.1. In this case, the added priority level indication field in the DCI, as mentioned in a previous embodiment, can be used for a UE to determine if the scheduled Msg2/MsgB contains the RAR associated to itself.

*2.3. Multiplex all RARs with the same RA-RNTI or MsgB-RNTI in the same PDSCH in response to the 1<sup>st</sup> message on different ROs with different PRACH configurations for different priority of UEs.*

With this method, multiple RAR messages for all UEs with different priorities will be multiplexed in one PDSCH when same RA-RNTI or MSGB-RNTI is calculated, and the RAR determination can be based on the received RAR messages.

For example, the RAR message can be differentiated based on one or more of the following: 1) a priority ID in RAR; 2) a contention resolution ID or C-RNTI (contention resolution ID and C-RNTI are available in success RAR in 2-step RACH, which are carried in MsgA PUSCH); 3) Preamble ID if the preamble IDs for different priorities of UEs are different; 4) Different RAR MAC subheader for different UE priorities (e.g., include priority information in the subheader); 5) a priority specific scrambling of PDSCH used for RAR, such that normal priority PDSCH for RAR is scrambled as in release 15 and 16, while higher than normal priority PDSCH will have another scrambling (legacy UEs will be able to only decode normal priority RAR, while UEs with this feature will be able to decode RAR by using new defined descrambling; and can be scrambling of all bits of the payload in PDSCH or only scrambling of only the CRC in PDSCH for RAR).

A method (1200, see FIG. 12) performed by a first user equipment, UE, for establishing a connection with an access point (e.g., gNB) includes the first UE transmitting (s1204) a random access, RA, preamble to the access point (generally, prior to this step s1204, the UE detects (s1202) a need to establish a connection with the access point); the first UE receiving (s1206), within a RA response (RAR) window, a first downlink control message (e.g., DCI) transmitted by the access point; the first UE determining (s1208) a priority value included in the first downlink control message; and the first UE determining (s1210), based on the priority value, whether or not the downlink control message is intended for a UE other than the first UE.

An access point (104) (e.g., gNB), performs: receiving (s1502) the random access, RA, preamble transmitted by the first user equipment, UE (102); determining (s1504) a PRACH configuration that was used by the first UE to transmit the random access preamble (e.g., determining the PRACH configuration that was used by the UE comprises or consists of determining a set of preambles to which the preamble transmitted by the UE belongs); generating (s1506) a first RA response for responding to the RA preamble; and transmitting (s1508) the first RA response to the first UE, wherein generating (s1506) the first RA response comprises: selecting (s1506a) a priority value based on the PRACH configuration that was used by the first UE to transmit the RA preamble and including the priority value in a field of the first RA response; or determining (s1506b) a priority based on the PRACH configuration and scrambling the first RA based on the determined priority.

When the message is a first downlink control message that was received with the RAR window, the method further comprises the first UE searching for a second downlink control message within the RAR window as a result of determining that the downlink control message is intended for a UE other than the first UE.

The message is the first RA response, and determining the priority value comprises: i) determining a priority value included in the first RA response, or ii) determining whether a priority specific scrambling was used to transmit the first RA response.

The method further includes receiving a second RA response, determining that the first RA response is no intended for the first UE, and as a result of determining that the first RA response is not intended for the first UE, further performing the steps of: determining a second priority value associate with the received second RA response; and determining, based on the second priority value, whether or not the second RA response is intended for a UE other than the first UE.

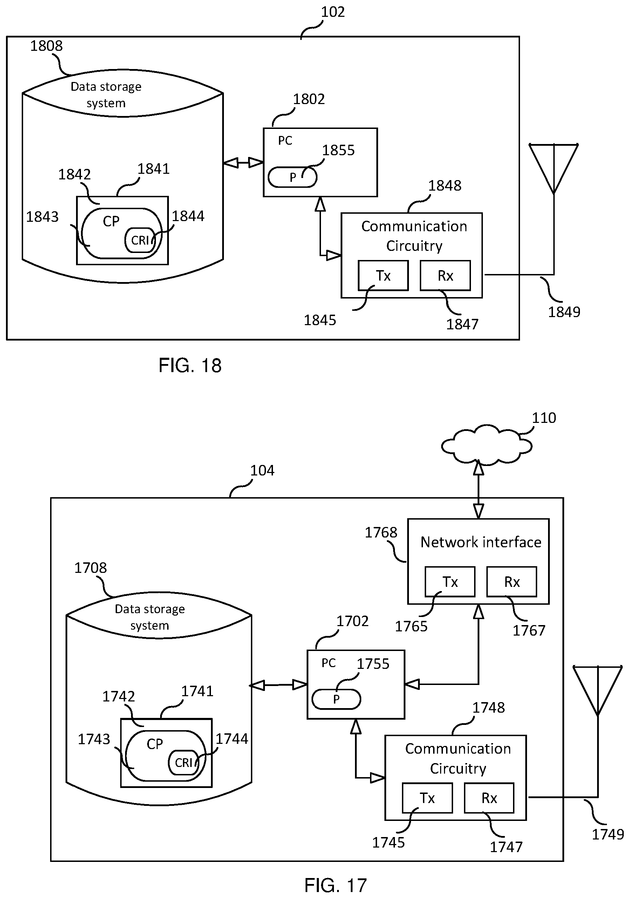

FIG. 17 is a block diagram of network node 104, according to some embodiments, for performing network node methods disclosed herein. As shown in FIG. 17, network node 104 may comprise: processing circuitry (PC) 1702, which may include one or more processors (P) 1755 (e.g., one or more general purpose microprocessors and/or one or more other processors, such as an application specific integrated circuit (ASIC), field-programmable gate arrays (FPGAs), and the like), which processors may be co-located in a single housing or in a single data center or may be geographically distributed (i.e., network node 104 may be a distributed computing apparatus); at least one network interface 1768 comprising a transmitter (Tx) 1765 and a receiver (Rx) 1767 for enabling network node 104 to transmit data to and receive data from other nodes connected to a network 110 (e.g., an Internet Protocol (IP) network) to which network interface 1768 is connected; communication circuitry 1748, which is coupled to an antenna arrangement 1749 comprising one or more antennas and which comprises a transmitter (Tx) 1745 and a receiver (Rx) 1747 for enabling network node 104 to transmit data and receive data (e.g., wirelessly transmit/receive data); and a local storage unit (a.k.a., "data storage system") 1708, which may include one or more non-volatile storage devices and/or one or more volatile storage devices. In embodiments where PC 1702 includes a programmable processor, a computer program product (CPP) 1741 may be provided. CPP 1741 includes a computer readable medium (CRM) 1742 storing a computer program (CP) 1743 comprising computer readable instructions (CRI) 1744. CRM 1742 may be a non-transitory computer readable medium, such as, magnetic media (e.g., a hard disk), optical media, memory devices (e.g., random access memory, flash memory), and the like. In some embodiments, the CRI 1744 of computer program 1743 is configured such that when executed by PC 1702, the CRI causes network node 104 to perform steps described herein (e.g., steps described herein with reference to the flow charts). In other embodiments, network node 104 may be configured to perform steps described herein without the need for code. That is, for example, PC 1702 may consist merely of one or more ASICs. Hence, the features of the embodiments described herein may be implemented in hardware and/or software.

FIG. 18 is a block diagram of UE 102, according to some embodiments. As shown in FIG. 18, UE 102 may comprise: processing circuitry (PC) 1802, which may include one or more processors (P) 1855 (e.g., one or more general purpose microprocessors and/or one or more other processors, such as an application specific integrated circuit (ASIC), field-programmable gate arrays (FPGAs), and the like); communication circuitry 1848, which is coupled to an antenna arrangement 1849 comprising one or more antennas and which comprises a transmitter (Tx) 1845 and a receiver (Rx) 1847 for enabling UE 102 to transmit data and receive data (e.g., wirelessly transmit/receive data); and a local storage unit (a.k.a., "data storage system") 1808, which may include one or more non-volatile storage devices and/or one or more volatile storage devices. In embodiments where PC 1802 includes a programmable processor, a computer program product (CPP) 1841 may be provided. CPP 1841 includes a computer readable medium (CRM) 1842 storing a computer program (CP) 1843 comprising computer readable instructions (CRI) 1844. CRM 1842 may be a non-transitory computer readable medium, such as, magnetic media (e.g., a hard disk), optical media, memory devices (e.g., random access memory, flash memory), and the like. In some embodiments, the CRI 1844 of computer program 1843 is configured such that when executed by PC 1802, the CRI causes UE 102 to perform steps described herein (e.g., steps described herein with reference to the flow charts). In other embodiments, UE 102 may be configured to perform steps described herein without the need for code. That is, for example, PC 1802 may consist merely of one or more ASICs. Hence, the features of the embodiments described herein may be implemented in hardware and/or software.

Conclusion

This disclosure provides different embodiments for differentiating the 2nd message (msg2 or msgB) for different categories of UEs (e.g., UEs with different priorities) and different PRACH configurations identified in the 1st step of the random access procedure. For example, the following embodiments are provided: 1) introduce different RNTI calculation methods for different priority UEs (e.g., include an offset to RA-RNTI or MSGB-RNTI); 2) number all the PRACH occasions for UEs with different priorities instead of numbering them separately so that different PRACH occasions will always have different RA-RNTI or MSGB-RNTI values; 3) include a field in the DCI scheduling the RAR (i.e., msg2 or msgB) to indicate which priority the RAR is for; 4) allow same RA-RNTI, but UE needs to monitor all possible RA-RNTI addressed PDCCHs; and 5) Multiplex all RARs with same RA-RNTI or MsgB-RNTI in the same PDSCH in response to the 1st message on different ROs for different priority of UEs.

While various embodiments are described herein, it should be understood that they have been presented by way of example only, and not limitation. Thus, the breadth and scope of this disclosure should not be limited by any of the above-described exemplary embodiments.

Additionally, while the processes described above and illustrated in the drawings are shown as a sequence of steps, this was done solely for the sake of illustration. Accordingly, the invention is defined by the appended claims.

**Claims**

1. A method (1900) performed by a first user equipment, UE, for establishing a connection with an access point, the method comprising:

    the first UE transmitting (s1904) a random access, RA, preamble to an access point using a Physical Random Access Channel, PRACH, configuration;
    the first UE receiving (s1906) a message transmitted by the access point, wherein the message includes a priority value indicating a priority level or the message is associated with the priority value, and the priority value included in or associated with the message is based on the PRACH configuration that was used by the UE to transmit the RA preamble;
    the first UE determining (s1908) the priority value included in or associated with the message; and
    the first UE determining (s1910), based on the priority value, whether or not the message is intended for a UE other than the first UE, wherein

the message is a downlink control message that was received within a RA response, RAR, window, or the message is a first RA response.

2. The method of claim 1, wherein

the message is a first downlink control message that was received within the RAR window, and the method further comprises the first UE searching for a second downlink control message within the RAR window as a result of determining that the downlink control message is intended for a UE other than the first UE.

3. The method of claim 1, wherein the message is the first RA response and includes the priority value.

4. The method of claim 1, wherein

the message is the first RA response, and
determining the priority value comprises:
determining whether a priority specific scrambling was used to transmit the first RA response.

5. The method of claim 3 or 4, further comprising:

receiving a second RA response,
determining that the first RA response is not intended for the first UE, and
as a result of determining that the first RA response is not intended for the first UE, further performing the steps of:

determining a second priority value associate with the received second RA response; and
determining, based on the second priority value, whether or not the second RA response is intended for a UE other than the first UE.

6. A computer program (1843) comprising instructions (1844) which when executed by processing circuitry (1802) of a user equipment, UE (102) causes the UE (102) to perform the method of any one of claims 1-5.

7. A data carrier signal carrying the computer program of claim 6, wherein the data carrier signal is one of an electronic signal, an optical signal, a radio signal, or a computer readable storage mediun having stored thereon the computer program of claim 6 (1842).

8. A first user equipment, UE (102), the first UE (102) being configured to perform a process that comprises:

the first UE transmitting (s1204) a random access, RA, preamble to an access point using a Physical Random Access Channel, PRACH, configuration;
the first UE receiving (s1206) a message transmitted by the access point, wherein the message includes a priority value indicating a priority or the message is associated with the priority value, and the priority value included in or associated with the message is based on the PRACH configuration that was used by the UE to transmit the RA preamble;
the first UE determining (s1208) the priority value included in or associated with the message ; and
the first UE determining (s1210), based on the priority value, whether or not the message is intended for a UE other than the first UE, wherein
the message is a downlink control message that was received within a RA response, RAR, window, or the message is a first RA response.

9. The first UE of claim 8, wherein

the message is a first downlink control message that was received within the RAR window, and
the first UE is further configured to search for a second downlink control message within the RAR window as a result of determining that the downlink control message is intended for a UE other than the first UE.

10. The first UE of claim 8, wherein the message is the first RA response and includes the priority value.

11. The first UE of claim 8, wherein

the message is the first RA response, and
determining the priority value comprises determining whether a priority specific scrambling was used to transmit the first RA response.

12. The first UE of claim 10 or 11, wherein the first UE is further configured to:

receive a second RA response,
determine that the first RA response is not intended for the first UE, and
as a result of determining that the first RA response is not intended for the first UE, determine a second priority value associate with the received second RA response, and determine, based on the second priority value, whether or not the second RA response is intended for a UE other than the first UE.

**Patentansprüche**

1. Verfahren (1900), das von einer ersten Benutzerausrüstung, UE, durchgeführt wird, zum Herstellen einer Verbindung mit einem Zugangspunkt, wobei das Verfahren Folgendes umfasst:

die erste UE, die eine Direktzugriffs-, RA-, Präambel an einen Zugangspunkt unter Verwendung einer physikalischen Direktzugriffskanal-, PRACH-, Konfiguration überträgt (s1904);
die erste UE, die eine vom Zugangspunkt übertragene Nachricht empfängt (s1906), wobei die Nachricht einen Prioritätswert beinhaltet, der eine Prioritätsstufe angibt, oder die Nachricht dem Prioritätswert zugeordnet ist, und der in der Nachricht beinhaltete oder ihr zugeordnete Prioritätswert auf der PRACH-Konfiguration basiert, die von der UE zum Übertragen der RA-Präambel verwendet wurde;
die erste UE den in der Nachricht beinhalteten oder ihr zugeordneten Prioritätswert bestimmt (s1908); und
die erste UE basierend auf dem Prioritätswert bestimmt (s1910), ob die Nachricht für eine andere UE als die erste UE gedacht ist oder nicht, wobei
die Nachricht eine Downlink-Steuernachricht ist, die innerhalb eines RA-Antwort-, RAR-, Fensters empfangen wurde, oder
die Nachricht eine erste RA-Antwort ist.

2. Verfahren nach Anspruch 1, wobei

die Nachricht eine erste Downlink-Steuernachricht ist, die innerhalb des RAR-Fensters empfangen wurde, und das Verfahren weiter umfasst, dass die erste UE infolgedessen, dass bestimmt wird, dass die Downlink-Steuernachricht für eine andere UE als die erste UE gedacht ist, innerhalb des RAR-Fensters nach einer zweiten Downlink-Steuernachricht sucht.

3. Verfahren nach Anspruch 1, wobei die Nachricht die erste RA-Antwort ist und den Prioritätswert beinhaltet.

4. Verfahren nach Anspruch 1, wobei

die Nachricht die erste RA-Antwort ist, und
Bestimmen des Prioritätswerts Folgendes umfasst:
Bestimmen, ob zum Übertragen der ersten RA-Antwort eine prioritätsspezifische Verschlüsselung verwendet wurde.

5. Verfahren nach Anspruch 3 oder 4, weiter umfassend:

Empfangen einer zweiten RA-Antwort,
Bestimmen, dass die erste RA-Antwort nicht für die erste UE gedacht ist, und
infolge des Bestimmens, dass die erste RA-Antwort nicht für die erste UE gedacht ist, weiteres Durchführen der folgenden Schritte:

Bestimmen eines zweiten Prioritätswerts, der der empfangenen zweiten RA-Antwort zugeordnet ist; und
Bestimmen, basierend auf dem zweiten Prioritätswert, ob die zweite RA-Antwort für eine andere UE als die erste UE gedacht ist oder nicht.

6.  Computerprogramm (1843), das Anweisungen (1844) umfasst, die, wenn sie von Verarbeitungsschaltung (1802) einer Benutzerausrüstung, UE, (102) ausgeführt werden, die UE (102) veranlassen, das Verfahren nach einem der Ansprüche 1-5 durchzuführen.

7.  Datenträgersignal, das das Computerprogramm nach Anspruch 6 trägt, wobei das Datenträgersignal eines von einem elektronischen Signal, einem optischen Signal, einem Funksignal oder einem computerlesbaren Speichermedium ist, das das Computerprogramm von Anspruch 6 (1842) darauf gespeichert aufweist.

8.  Erste Benutzerausrüstung, UE, (102), wobei die erste UE (102) dazu konfiguriert ist, einen Prozess durchzuführen, der Folgendes umfasst:

    die erste UE, die eine Direktzugriffs-, RA-, Präambel an einen Zugangspunkt unter Verwendung einer physikalischen Direktzugriffskanal-, PRACH-, Konfiguration überträgt (s1204);
    die erste UE, die eine vom Zugangspunkt übertragene Nachricht empfängt (s1206), wobei die Nachricht einen Prioritätswert beinhaltet, der eine Priorität angibt, oder die Nachricht dem Prioritätswert zugeordnet ist, und der in der Nachricht beinhaltete oder ihr zugeordnete Prioritätswert auf der PRACH-Konfiguration basiert, die von der UE zum Übertragen der RA-Präambel verwendet wurde;
    die erste UE, die den in der Nachricht beinhalteten oder ihr zugeordneten Prioritätswert bestimmt (s1208); und
    die erste UE, die basierend auf dem Prioritätswert bestimmt (s1210), ob die Nachricht für eine andere UE als die erste UE gedacht ist oder nicht, wobei
    die Nachricht eine Downlink-Steuernachricht ist, die innerhalb eines RA-Antwort-, RAR-, Fensters empfangen wurde, oder
    die Nachricht eine erste RA-Antwort ist.

9.  Erste UE nach Anspruch 8, wobei

    die Nachricht eine erste Downlink-Steuernachricht ist, die innerhalb des RAR-Fensters empfangen wurde, und
    die erste UE dazu konfiguriert ist, infolgedessen, dass bestimmt wird, dass die Downlink-Steuernachricht für eine andere UE als die erste UE gedacht ist, innerhalb des RAR-Fensters nach einer zweiten Downlink-Steuernachricht zu suchen.

10. Erste UE nach Anspruch 8, wobei die Nachricht die erste RA-Antwort ist und den Prioritätswert beinhaltet.

11. Erste UE nach Anspruch 8, wobei

    die Nachricht die erste RA-Antwort ist, und
    Bestimmen des Prioritätswerts Bestimmen umfasst, ob zum Übertragen der ersten RA-Antwort eine prioritätsspezifische Verschlüsselung verwendet wurde.

12. Erste UE nach Anspruch 10 oder 11, wobei die erste UE weiter für Folgendes konfiguriert ist:

    Empfangen einer zweiten RA-Antwort,
    Bestimmen, dass die erste RA-Antwort nicht für die erste UE gedacht ist, und
    infolge des Bestimmens, dass die erste RA-Antwort nicht für das erste UE gedacht ist, Bestimmen eines zweiten Prioritätswerts, der der empfangenen zweiten RA-Antwort zugeordnet ist, und Bestimmen, basierend auf dem zweiten Prioritätswert, ob die zweite RA-Antwort für eine andere UE als die erste UE gedacht ist oder nicht.

**Revendications**

1.  Procédé (1900) réalisé par un premier équipement d'utilisateur, UE, pour établir une connexion avec un point d'accès, le procédé comprenant :

    le premier UE transmettant (s1904) un préambule d'accès aléatoire, RA, à un point d'accès en utilisant une configuration de canal physique d'accès aléatoire, PRACH ;
    le premier UE recevant (s1906) un message transmis par le point d'accès, dans lequel le message inclut une valeur de priorité indiquant un niveau de priorité ou le message est associé à la valeur de priorité, et la valeur de priorité incluse dans le ou associée au message est basée sur la configuration PRACH qui a été utilisée par l'UE pour transmettre le préambule RA ;

le premier UE déterminant (s1908) la valeur de priorité incluse dans le ou associée au message ; et

le premier UE déterminant (s1910), sur la base de la valeur de priorité, si le message est destiné ou non à un UE autre que le premier UE, dans lequel

le message est un message de contrôle de liaison descendante qui a été reçu dans une fenêtre de réponse RA, RAR, ou

le message est une première réponse RA.

2. Procédé selon la revendication 1, dans lequel

le message est un premier message de contrôle de liaison descendante qui a été reçu dans la fenêtre RAR, et

le procédé comprend en outre le premier UE recherchant un second message de contrôle de liaison descendante dans la fenêtre RAR à la suite de la détermination que le message de contrôle de liaison descendante est destiné à un UE autre que le premier UE.

3. Procédé selon la revendication 1, dans lequel le message est la première réponse RA et inclut la valeur de priorité.

4. Procédé selon la revendication 1, dans lequel

le message est la première réponse RA, et

la détermination de la valeur de priorité comprend :

la détermination du fait qu'un embrouillage spécifique à la priorité a ou non été utilisé pour transmettre la première réponse RA.

5. Procédé selon la revendication 3 ou 4, comprenant en outre :

la réception d'une seconde réponse RA,

la détermination du fait que la première réponse RA n'est pas destinée au premier UE, et

à la suite de la détermination du fait que la première réponse RA n'est pas destinée au premier UE, la réalisation en outre des étapes consistant à :

déterminer une seconde valeur de priorité associée à la seconde réponse RA reçue ; et

déterminer, sur la base de la seconde valeur de priorité, si la seconde réponse RA est destinée ou non à un UE autre que le premier UE.

6. Programme informatique (1843) comprenant des instructions (1844) qui, lorsqu'elles sont exécutées par un ensemble de circuits de traitement (1802) d'un équipement d'utilisateur, UE (102), amènent l'UE (102) à réaliser le procédé selon l'une quelconque des revendications 1-5.

7. Signal porteur de données portant le programme informatique selon la revendication 6, dans lequel le signal porteur de données est un parmi un signal électronique, un signal optique, un signal radio ou un support de stockage lisible par ordinateur sur lequel est stocké le programme informatique selon la revendication 6 (1842).

8. Premier équipement d'utilisateur, UE (102), le premier UE (102) étant configuré pour réaliser un processus qui comprend :

le premier UE transmettant (s1204) un préambule d'accès aléatoire, RA, à un point d'accès en utilisant une configuration de canal physique d'accès aléatoire, PRACH ;

le premier UE recevant (s1206) un message transmis par le point d'accès, dans lequel le message inclut une valeur de priorité indiquant une priorité ou le message est associé à la valeur de priorité, et la valeur de priorité incluse dans le ou associée au message est basée sur la configuration PRACH qui a été utilisée par l'UE pour transmettre le préambule RA ;

le premier UE déterminant (s1208) la valeur de priorité incluse dans le ou associée au message ; et

le premier UE déterminant (s1210), sur la base de la valeur de priorité, si le message est destiné ou non à un UE autre que le premier UE, dans lequel

le message est un message de contrôle de liaison descendante qui a été reçu dans une fenêtre de réponse RA, RAR, ou

le message est une première réponse RA.

**9.** Premier UE selon la revendication 8, dans lequel

le message est un premier message de contrôle de liaison descendante qui a été reçu dans la fenêtre RAR, et le premier UE est en outre configuré pour rechercher un second message de contrôle de liaison descendante dans la fenêtre RAR à la suite de la détermination que le message de contrôle de liaison descendante est destiné à un UE autre que le premier UE.

**10.** Premier UE selon la revendication 8, dans lequel le message est la première réponse RA et inclut la valeur de priorité.

**11.** Premier UE selon la revendication 8, dans lequel

le message est la première réponse RA, et la détermination de la valeur de priorité comprend la détermination du fait qu'un embrouillage spécifique à la priorité a ou non été utilisé pour transmettre la première réponse RA.

**12.** Premier UE selon la revendication 10 ou 11, dans lequel le premier UE est en outre configuré pour :

recevoir une seconde réponse RA, déterminer que la première réponse RA n'est pas destinée au premier UE, et à la suite de la détermination du fait que la première réponse RA n'est pas destinée au premier UE, déterminer une seconde valeur de priorité associée à la seconde réponse RA reçue, et déterminer, sur la base de la seconde valeur de priorité, si la seconde réponse RA est destinée ou non à un UE autre que le premier UE.

Step 1: Random Access Preamble

Step 2a: DCI (schedule RAR)

Step 2b: RAR

Step 3: Msg3

Step 4: Msg4

FIG. 1

FIG. 2

EP 4 144 173 B1

☐ =1 PRACH occasion

Freq.

FDM of PRACH occasions
(1, 2, 4, or 8 occasions,
always contiguous)

Frequency of first
PRACH occasion

Time

One *PRACH configuration period* (10, 20, 40, 80, or 160ms).   The pattern then repeats....
A row in the RACH configuration table specifies the time-domain
PRACH occasion pattern for one PRACH configuration period.

FIG. 3

Example:

- #SSBs-per-PRACH-occasion=4
- #CB-preambles-per-SSB=4
- #msgA-CB-PreamblesPerSSB=2

The 64 preambles configured for the cell (per PRACH occasion)

01        16        32        48        63

Map to SSB 0     SSB 1        SSB 2        SSB 3

▨ = Preamble indices for CBRA 4-step RACH
▧ = Preamble indices for CFRA 4-step RACH
▩ = Preamble indices for CBRA 2-step RACH

FIG. 4

EP 4 144 173 B1

| | | |
|---|---|---|
| R | Timing Advance Command | Oct 1 |
| Timing Advance Command | UL Grant | Oct 2 |
| UL Grant | | Oct 3 |
| UL Grant | | Oct 4 |
| UL Grant | | Oct 5 |
| Temporary C-RNTI | | Oct 6 |
| Temporary C-RNTI | | Oct 7 |

FIG. 5

| | |
|---|---|
| R \| Timing Advance Command | Oct 1 |
| Timing Advance Command \| UL Grant | Oct 2 |
| UL Grant | Oct 3 |
| UL Grant | Oct 4 |
| UL Grant | Oct 5 |
| Temporary C-RNTI | Oct 6 |
| Temporary C-RNTI | Oct 7 |

FIG. 6

| UE Contention Resolution Identity | | | | | Oct 1 |
|---|---|---|---|---|---|

FIG. 7

M of PRACH occasions
2, 4, or 8 occasions,
ays contiguous)

consecutive

Frequency
of first RO
for normal
priority RA

Freq.

Time

One *PRACH configuration period* (10, 20, 40, 80, or 160ms).
A row in the RACH configuration table specifies the time-domain
PRACH occasion pattern for one PRACH configuration period.

The pattern then repeats....

▢ = 1 RO for normal priority RA

■ = 1 RO for high priority RA

FIG. 8

FDM of PRACH occasions (1, 2, 4, or 8 occasions, always contiguous)

Frequency of first RO for high priority RA

Frequency of first RO for normal priority RA

Freq.

One *PRACH configuration period* (10, 20, 40, 80, or 160ms). A row in the RACH configuration table specifies the time-domain PRACH occasion pattern for one PRACH configuration period.

The pattern then repeats....

☐ = 1 RO for normal priority RA
■ = 1 RO for high priority RA

Time

FIG. 9

1000

s1002

detecting a need to obtain a high priority service

s1004

detecting a need to establish a connection with an access point in order to obtain the high priority service

s1006

selecting a first random access, RA, preamble

s1008

transmitting the selected RA preamble to the access point during a particular symbol of a particular slot

s1010

calculating a first temporary identifier, TI, based on the particular symbol and the particular slot, wherein the first TI, TI_1, is calculated such that TI_1 would be different than a second TI, TI_2, calculated by a second UE as a result of the second UE transmitting to the access point during the same particular symbol of the same particular slot a second RA preamble

s1012

using TI_1 to detect that a downlink control message transmitted by the access point is intended for the first UE

FIG. 10

1100

s1102

receiving a first random access, RA, preamble transmitted by a first user equipment, UE, during a particular symbol of a particular slot

s1104

determining a first temporary identifier, TI, based on the particular symbol and the particular slot, wherein the first TI, TI_1, is calculated such that TI_1 would be different than a second TI, TI_2, calculated by the access point as a result of the access point receiving a second RA preamble transmitted by a second UE during the same particular symbol of the same particular slot

s1106

using TI_1 to scramble a portion of a message intended for the first UE

s1108

transmitting the message to the first UE

FIG. 11

1200

s1202

```
┌ ─ ─ ─ ─ ─ ─ ─ ─ ─ ─ ─ ─ ─ ─ ─ ─ ─ ─ ─ ─ ─ ─ ─ ─ ─ ─ ─ ┐
│      detecting a need to establish a connection with an access point      │
└ ─ ─ ─ ─ ─ ─ ─ ─ ─ ─ ─ ─ ─ ─ ─ ─ ─ ─ ─ ─ ─ ─ ─ ─ ─ ─ ─ ┘
```

s1204

transmitting a random access, RA, preamble to the access point

s1206

receiving, within a RA response (RAR) window, a first downlink control
message transmitted by the access point

s1208

determining a priority value included in the first downlink control message

s1210

determining, based on the priority value, whether or not the downlink
control message is intended for a UE other than the first UE

FIG. 12

1300

s1302

receiving a random access, RA, preamble transmitted by a user equipment, UE

s1304

determining a PRACH configuration that was used by the UE to transmit the random access preamble

s1306

generating a downlink control message

s1306a

selecting a priority value based on the PRACH configuration that was used by the UE to transmit the RA preamble

s1306b

including the priority value in a field of the downlink control message

s1308

transmitting the downlink control message to the UE

FIG. 13

1400

s1402

┌ ─ ─ ─ ─ ─ ─ ─ ─ ─ ─ ─ ─ ─ ─ ─ ─ ─ ─ ─ ─ ─ ─ ─ ─ ─ ─ ─ ─ ┐
│ detecting a need to establish a connection with an access point │
└ ─ ─ ─ ─ ─ ─ ─ ─ ─ ─ ─ ─ ─ ─ ─ ─ ─ ─ ─ ─ ─ ─ ─ ─ ─ ─ ─ ─ ┘

s1404

transmitting a random access, RA, preamble to the access point

s1406

receiving a first RA response transmitted by the access point

s1408

determining a priority value associate with the received first RA response

s1410

determining, based on the priority value, whether or not the first RA
response is intended for a UE other than the first UE

FIG. 14

1500

s1502

receiving a random access, RA, preamble transmitted by a first UE

s1504

determining a PRACH configuration that was used by the first UE to transmit the random access preamble

s1506

generating a first RA response for responding to the RA preamble

s1506a

selecting a priority value based on the PRACH configuration that was used by the first UE to transmit the RA preamble and including the priority value in a field of the first RA response

OR

s1506b

determining a priority based on the PRACH configuration and scrambling the first RA based on the determined priority

s1508

transmitting the first RA response to the first UE

FIG. 15

1600

s1602

```
┌ ─ ─ ─ ─ ─ ─ ─ ─ ─ ─ ─ ─ ─ ─ ─ ─ ─ ─ ─ ┐
│   detecting a need to establish a connection with an access point   │
└ ─ ─ ─ ─ ─ ─ ─ ─ ─ ─ ─ ─ ─ ─ ─ ─ ─ ─ ─ ┘
```

s1604

transmitting a random access, RA, preamble to the access point

s1606

receiving a first downlink control message transmitted by the access point

s1608

using information included in the first downlink control message to receive a first RA response transmitted by the access point

s1610

determining that the first RA response is intended for another UE

s1612

as a result of determining that the first RA response is intended for another UE, searching for a second downlink control message transmitted by the access point

FIG. 16

FIG. 18

FIG. 17

1900

s1904

transmitting a random access, RA, preamble to the access point

s1906

Receiving a message transmitted by the access point

s1908

determining a priority value included in or associated with the message

s1910

determining, based on the priority value, whether or not the message is intended for a UE other than the first UE

FIG. 19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CA 3108098 A1